Europäisches Patentamt

European Patent Office

Office européen des brevets

(19)

(11) Veröffentlichungsnummer: **0 056 163**
**B1**

(12) **EUROPÄISCHE PATENTSCHRIFT**

(45) Veröffentlichungstag der Patentschrift:
06.11.85

(51) Int. Cl.⁴: **C 04 B 28/14,** B 22 C 1/00

(21) Anmeldenummer: **81110841.4**

(22) Anmeldetag: **30.12.81**

(54) Hochexpansionsgips.

(30) Priorität: **14.01.81 DE 3100822**

(43) Veröffentlichungstag der Anmeldung:
**21.07.82 Patentblatt 82/29**

(45) Bekanntmachung des Hinweises auf die Patenterteilung:
**06.11.85 Patentblatt 85/45**

(84) Benannte Vertragsstaaten:
**DE FR GB IT NL SE**

(56) Entgegenhaltungen:
**DE - A - 2 433 554**
**US - A - 2 741 562**
**US - A - 3 839 269**

**Die Akte enthält technische Angaben, die nach dem Eingang der Anmeldung eingereicht wurden und die nicht in dieser Patentschrift enthalten sind.**

(73) Patentinhaber: **Giulini Chemie GmbH,**
**Giulinistrasse 2 Postfach 123,**
**D-6700 Ludwigshafen/Rhein (DE)**

(72) Erfinder: **Fässle, Fritz, Weinheimerstrasse 36,**
**D-6703 Limburgerhof (DE)**

(74) Vertreter: **Benatzky, Erika, Dr., Giulinistrasse 2,**
**D-6700 Ludwigshafen/Rh. (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Gegenstand der vorliegenden Erfindung ist ein Hochexpansionsgips mit einer linearen Abbindeexpansion von 0,8 bis 3% auf Basis von α-Calciumsulfat-Halbhydrat sowie ein Verfahren zur Herstellung von Abformungen und Formteilen aus diesem Gips.

Gipsformverfahren sind seit langem bekannt. Der Gips dient hier vornehmlich als Bindemittel und wird in Verbindung mit feuerfesten Formstoffen wie Quarzsand, Schamotte und Zirkonsilicat verwendet, wobei zur Verbesserung der Gasdurchlässigkeit bzw. Erhöhung der mechanischen Festigkeit gegebenenfalls Zusätze von Asbest, Talkum, Wasserglas, Glyzerin, Alkohol u.a. gemacht werden.

Zur Herstellung von Formen bzw. Kernen wird üblicherweise gebrannter Gips, d.h. β-Calciumsulfat-Halbhydrat, eingesetzt, der mit Wasser verrührt unter Wasseraufnahme und Bildung von Calciumsulfat-Dihydrat erhärtet. Ein derartiger Gips schwindet beim Abbinden nicht, kann sogar in Abhängigkeit von den Herstellungsbedingungen (Brenndauer und Brenntemperatur) beim Erhärten geringfügig wachsen (Abbindeexpansion).

Das unterscheidende Merkmal der verschiedenen Gipsformverfahren wird hauptsächlich in den unterschiedlichen Mischungsverhältnissen des Gipses mit Wasser sowie in der Art und Weise der Wasserentfernung aus den Formen, d.h. in der Trocknungstechnik, gesehen. Porengrösse und damit Gasdurchlässigkeit und mechanische Festigkeit werden von Mischungsverhältnis und Trocknungsart in einem so hohen Masse beeinflusst, dass unter Expansion im wesentlichen die durch thermische Einwirkung erzielte Expansion verstanden wird. Ein derartiger Formgips ist nicht Gegenstand der vorliegenden Erfindung.

Aus der DE-B 1 110 825 ist ferner eine Einbettmasse für Zahn-Inlays, Kronen und Brücken bekannt, die im wesentlichen aus einer Mischung von α- oder β-Halbhydratgips und β-Quarz oder β-Cristobalit besteht. Eine derartige Masse bringt jedoch keine ausreichend hohe Expansion bei der Abbindung. Eine hohe Expansion kann mit den vorbekannten Massen nur durch eine entsprechende thermische Behandlung des Gipses erzielt werden.

In der DE-B 1 110 825 wird weiterhin vorgeschlagen, für Metallgüsse eine Einbettmasse zu verwenden, die neben dem abbindungsfähigen Gips mindestens einen Elektrolyten enthält, der den Dissoziationsgrad des Gips-Kations und mindestens einen Elektrolyten enthält, der den Dissoziationsgrad des Gips-Anions vermindert. Durch die kombinierte Elektrolytzugabe soll vor allem eine Verlängerung der Plastizität bei gleichzeitiger Verkürzung der Abbindezeit erzielt werden. Ausserdem soll sich mit der vorgeschlagenen Einbettmasse eine Gesamt-Expansion von etwa 1,6 erreichen lassen, die der Goldkontraktion beim Übergang vom flüssigen in den festen Zustand entspricht. Zum Herstellen von Gipsmodellen, insbesondere Abformungen und Formteilen, die einer thermischen Behandlung nicht unterworfen werden, ist diese Einbettmasse jedoch nicht geeignet.

In «Giesserei» 59 (1972) wird auf den Seiten 81/82 auch bereits der Einsatz von Hartgipsmassen zur Gipsmodellplattenerzeugung vorgeschlagen. Nach Tafel 1 dieser Veröffentlichung besitzen die eingesetzten Gipssorten folgende prozentuale lineare Ausdehnung:

| | |
|---|---|
| Modellgips: | 0,20 |
| Hartformgips: | 0,40 |
| Mischung aus 50% Modellgips und 50% Hartformgips: | 0,30 |
| Kunststoffvergüteter Gips: | 0,14 |

Wie sich gezeigt hat, werden für Metallgüsse nunmehr im verstärkten Masse Gipse mit einer hohen Expansion verlangt. Durch die Verwendung sich nach allen Richtungen gleichmässig stark ausdehnender Gipse soll die beim Metallguss auftretende Schwindung (Kontraktion) bei der Modellherstellung unbeschränkt berücksichtig werden. Die Passgenauigkeit der Fertigteile soll dadurch gesichert und die Herstellung vereinfacht und verbilligt werden.

Aufgabe der vorliegenden Erfindung ist es daher, Gipse mit hoher Abbindeexpansion, insbesondere solche mit einer linearen Abbindeexpansion von 0,8 bis 3%, zu finden. Ausserdem sollen Gipse entwickelt werden, deren lineare Ausdehnung auf die Kontraktion des jeweils eingesetzten Gussmetalls durch Änderung der Gipszusammensetzung bzw. Änderung der Verfahrensparameter bei der Modellherstellung eingestellt werden kann.

Die gestellte Aufgabe kann überraschenderweise mit einem Gips gelöst werden, bestehend aus

a) α-Calciumsulfat-Halbhydratkristallen mit einer mittleren Korngrösse von 30 bis 70 μm und einem Achsenverhältnis b:c (Breite zu Höhe) von 2:1 bis 1:1

b) einer organischen oder anorganischen Säure und/oder einem sauren Salz dieser Säure in solchen Mengen, dass der Gips nach der Wasserzugabe einen pH-Wert zwischen 3 und 6 aufweist sowie

c) einer Impfkeime liefernden Substanz von max. 30 Gew.%.

Dass das Verhältnis der Breite zur Kristallhöhe die Abbindeexpansion in einem so hohen Masse beeinflussen kann, war aus dem Stand der Technik nicht ohne weiteres herleitbar. Lineare Abbindeexpansionen bis 3% lassen sich bei Berücksichtigung der erfindungsgemässen Merkmale ohne Schwierigkeiten erreichen. Der Anteil der Komponente b) wird dabei so bemessen, dass der Gips bei der Vermischung mit Wasser insbesondere einen pH-Wert zwischen 4 und 4,5 aufweist. Oxalsäure und Weinsäure werden an dieser Stelle beispielhaft als pH-Regler genannt.

Ein wesentliches Merkmal der Erfindung wird, ausser der Kristallgrösse, in der Verwendung von Impfkeimen gesehen. Als Impfkeime liefernde Substanzen können alle feinkörnigen Stoffe verwendet werden, Quarzmehl, feinkristallines Aluminiumhydroxid und feinkristallines Aluminiumoxid haben sich als Impfkeime bestens bewährt. Die Impfkeimmenge sollte, bezogen auf α-Calciumsulfat-Halbhydrat, nicht oberhalb 30 Gew.-% liegen. Impfkeimmengen von 1–20 Gew.-% haben in den durchgeführten Versuchen zu guten Erfolgen geführt. Wie noch anhand von Beispielen gezeigt wird, lassen sich mit etwa 15 Gew.-% Impfkeimen, in Abhängigkeit von der α-CaSO$_4$·½ H$_2$O Kristallstruktur, lineare Expansionen von etwa 1,2% (1,2 cm/m) erreichen. Durch Vergrösserung der α-CaSO$_4$·½ H$_2$O-Kristalle kann unter sonst gleichen Arbeitsbedingungen die Expansion bis auf 3% gesteigert werden.

Es muss an dieser Stelle darauf hingewiesen werden, dass es sich bei den vorstehenden Werten (Expansion) ausschliesslich um solche handelt, die bei der Abbindung des neuen Gipses erzielt werden. Eine Trocknung der Modelle bei höherer Temperatur oder Glühen der Gipsmodelle findet nicht statt, so dass eine thermische Expansion nicht eintritt. Dass die Abbindeexpansion des α-Calciumsulfat-Halbhydrates bei Einhaltung der erfindungsgemässen Massnahmen derart erhöht wird, konnte aus dem Stand der Technik nicht hergeleitet werden.

Weitere Expansionserhöhungen lassen sich bei der Abbindung dann erzielen, wenn der Gipsmischung noch leichtlösliche Calciumsalze, z.B. Calciumacetat und Calciumformiat zugesetzt werden. Auch durch Verringerung der Wassertemperatur kann die Abbindeexpansion zusätzlich erhöht werden und der gegebenenfalls extreme Schwund der Metalle bzw. Metallegierungen bei der Modellherstellung berücksichtigt werden. Wie beobachtet wurde, kann die lineare Expansion durch Temperatursenkung um 5°C jeweils um ca. 0,05% erhöht werden. Geeignete Temperaturen liegen zwischen 15 und 30°C. Die obere Grenztemperatur liegt bei 60°C.

Gegenstand der vorliegenden Erfindung ist auch die Herstellung von Gipsmodellen und Modellplatten durch Giessen einer wässrigen Gipsaufschlämmung in Modellabgüsse bzw. Modellabdrücke. Durch die zugegebene Wassermenge kann die Expansion zusätzlich gesteurt und der jeweiligen Kontraktion des Metalles bzw. Metallegierung angeglichen werden.

Nach einer günstigen Ausführungsform der Erfindung wird der Expansionsgips mit Wasser in einem Gewichtsverhältnis 100:20 bis 100:60, insbesondere 100:35 bis 100:45 eingesetzt.

Anhand von Beispielen soll nun der Gegenstand der Erfindung noch näher erläutert werden.

## 1. Beispiel

800 kg eines grobkristallinen α-Calciumsulfat-Halbhydrates aus hydrothermaler Umkristallisation mit einer mittleren Korngrösse von 50 μm werden mit 150 kg Quarzmehl mit einer mittleren Korngrösse von 20 μm, 120 g Oxalsäure zur Absenkung des pH-Wertes auf pH 4,0–4,5, unter Zusatz von 0,02% Retardan® als Verzögerer homogen vermischt. Mit diesem homogenen Pulver lässt sich bei einem Mischungsverhältnis von 100 kg Pulver:39 l Wasser (Wassertemperatur 15°C) bei einer Verarbeitungszeit von 15–20 Minuten eine Abbindeexpansion von 1,20% erzielen. Sie kann durch Erhöhung der Wassertemperatur von je 5°C um je 0,05% gesenkt werden.

## 2. Beispiel

Es wird wie im Beispiel 1 gearbeitet. Anstelle von Quarzmehl wird jedoch Tonerdehydrat mit einer mittleren Korngrösse von 60 μm eingesetzt.

Der Expansionsverlauf ist der graphischen Darstellung zu entnehmen, wobei die Wassertemperatur 15, 20 bzw. 25°C betrug.

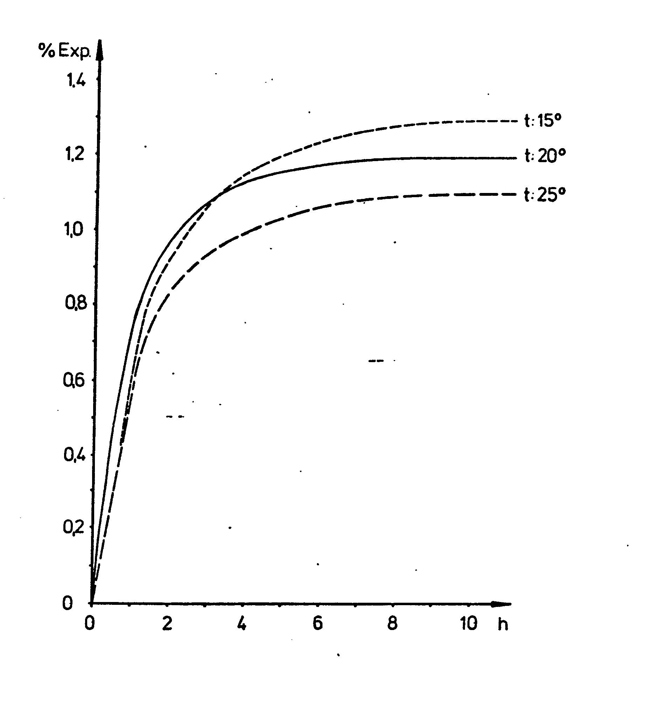

## Patentansprüche

1. Hochexpansionsgips mit einer linearen Abbindeexpansion von 0,8 bis 3% auf Basis von Calciumsulfat-Halbhydrat, dadurch gekennzeichnet, dass er aus

a) α-Calciumsulfat-Halbhydratkristallen mit einer mittleren Korngrösse von 30 bis 70 μm und einem Achsenverhältnis b:c (Breite zu Höhe) von 2:1 bis 1:1,
b) einer organischen oder anorganischen Säure und/oder einem sauren Salz dieser Säure in solchen Mengen besteht, dass der Gips nach der Wasserzugabe einen pH-Wert zwischen 3 und 6 aufweist und
c) einer Impfkeime liefernden Substanz, max. 30 Gew.-%.

2. Hochexpansionsgips nach Anspruch 1, dadurch gekennzeichnet, dass der Anteil der Komponente b) so bemessen ist, dass der Gips nach der Wasserzugabe einen pH-Wert zwischen 4 und 4,5 aufweist.

3. Hochexpansionsgips nach den Ansprüchen 1 und 2, dadurch gekennzeichnet, dass er als Komponente b) Oxalsäure enthält.

4. Hochexpansionsgips nach den Ansprüchen 1 bis 3, dadurch gekennzeichnet, dass er als Impfkeime liefernde Substanz Quarzmehl, feinkristallines Aluminiumhydroxid und/oder feinkristallines Aluminiumoxid enthält.

5. Hochexpansionsgips nach Anspruch 4, dadurch gekennzeichnet, dass er die Impfkeime liefernde Substanz in Mengen von 1 bis 20 Gew.-%, bezogen auf den Hochexpansionsgips, enthält.

6. Hochexpansionsgips nach den Ansprüchen 1 bis 5, dadurch gekennzeichnet, dass er als weitere Komponente einen Abbinde-Verzögerer in Mengen von 0,01 bis 0,05 Gew.-%, bezogen auf Calciumsulfat-Halbhydrat, enthält.

7. Hochexpansionsgips nach Anspruch 6, dadurch gekennzeichnet, dass er als Verzögerer Retardan® enthält.

8. Hochexpansionsgips nach den Ansprüchen 1 bis 7, dadurch gekennzeichnet, dass er weiterhin wasserlösliche Calciumsalze enthält, insbesondere Calciumacetat und Calciumformiat.

9. Verfahren zur Herstellung von Abformungen und Formteilen, dadurch gekennzeichnet, dass mit einer wässrigen Aufschlämmung eines Hochexpansionsgipses nach den Ansprüchen 1 bis 8 gearbeitet wird.

10. Verfahren nach dem Anspruch 9, dadurch gekennzeichnet, dass der Hochexpansionsgips mit Wasser in einem Gewichtsverhältnis 100:20 bis 100:60, insbesondere 100:35 bis 100:45 vermischt wird.

11. Verfahren nach den Ansprüchen 9 und 10, dadurch gekennzeichnet, dass die Temperatur der wässrigen Gipsaufschlämmung maximal 60°C, insbesondere 15–30°C beträgt.

## Claims

1. High expansion gypsum with a linear setting expansion of 0.8 to 3% based on calcium sulphate hemihydrate, characterized in that it comprises

a) $\alpha$-calciumsulphate hemihydrate crystals with an average particle size of 30 to 70 μm and an axial ratio b:c (width to height) of 2:1 to 1:1,
b) an organic or inorganic acid and/or an acid salt of said acid in quantities such that, after addition of water, gypsum has a pH-value between 3 and 6, and
c) max. 30% by weight of a substance supplying seed crystals.

2. High expansion gypsum according to claim 1, characterized in that the proportion of component b) is fixed in such a way that, after the addition of water, the gypsum has a pH-value between 4 and 4.5.

3. High expansion gypsum according to claims 1 and 2, characterized in that it contains oxalic acid as component b).

4. High expansion gypsum according to claims 1 to 3, characterized in that it contains as the substance supplying seed crystals quartz powder, finely crystalline aluminium hydroxide and/or finely crystalline aluminium oxide.

5. High expansion gypsum according to claim 4, characterized in that it contains the substance supplying the seed crystals in quantities of 1 to 20% by weight, based on the high expansion gypsum.

6. High expansion gypsum according to claims 1 to 5 and characterized in that it contains as a further component a setting retarder, in quantities of 0.01 to 0.05% by weight, based on the calcium sulphate hemihydrate.

7. High expansion gypsum according to claim 6, characterized in that it contains Retardan as the retarder.

8. High expansion gypsum according to claims 1 to 7, characterized in that it also contains watersoluble calcium salts, particularly calcium acetate and calcium formate.

9. Process for the production of models and mould parts, characterized in that working takes place with an aqueous suspension of a high expansion gypsum according to claims 1 to 8.

10. Process according to claim 9, characterized in that the high expansion gypsum is mixed with water in a weight ratio of 100:20 to 100:60, particularly 100:35 to 100:45.

11. Process according to claims 9 and 10, characterized in that the temperature of the aqueous gypsum suspension is max. 60°C, particularly 15 to 30°C.

## Revendications

1. Plâtre à forte expansion, avec une expansion linéaire à la prise de 0,8 à 3%, à base de semihydrate de sulfate de calcium, caractérisé en ce qu'il se compose:

a) de cristaux de semihydrate de sulfate de calcium α ayant une dimension de particule moyenne de 30 à 70 μm et un rapport axial b:c (largeur par rapport à la hauteur) de 2:1 à 1:1,
b) d'un acide organique ou minéaral et/ou d'un sel acide de cet acide, en des quantités pour que le plâtre, après l'addition d'eau, présente une valeur de pH entre 3 et 6 et
c) d'une substance fournissant des germes d'inoculation, à raison de 30% en poids maximum.

2. Plâtre à forte expansion selon la revendication 1, caractérisé en ce que la proportion du composant b) est établie pour que le plâtre, après l'addition d'eau, présente une valeur de pH entre 4 et 4,5.

3. Plâtre à forte expansion selon les revendications 1 et 2, caractérisé en ce qu'en tant que composant b) il contient de l'acide oxalique.

4. Plâtre à forte expansion selon les revendications 1 à 3, caractérisé en ce qu'il contient comme substance fournissant des germes d'inoculation de la farine de quartz, de l'hydroxyde d'aluminium finement cristallin et/ou de l'oxyde d'aluminium finement cristallin.

5. Plâtre à forte expansion selon la revendication 4, caractérisé en ce qu'il contient la substance fournissant des germes d'inoculation en des quantités de 1 à 20% en poids par rapport au plâtre à forte expansion.

6. Plâtre à forte expansion selon les revendications 1 à 5, caractérisé en ce qu'en tant que composant supplémentaire il contient un retardateur de prise en des quantités de 0,01 à 0,05% en poids par rapport au semihydrate de sulfate de calcium.

7. Plâtre à forte expansion selon la revendication 6, caractérisé en ce qu'il contient comme retardateur du Retardan®.

8. Plâtre à forte expansion selon les revendications 1 à 7, caractérisé en ce qu'il contient en outre des sels de calcium solubles dans l'eau, en particulier de l'acétate de calcium et du formiate de calcium.

9. Procédé de fabrication de moulages et de pièces moulées, caractérisé en ce qu'on opère avec une suspension aqueuse d'un plâtre à forte expansion selon les revendications 1 à 8.

10. Procédé selon la revendication 9, caractérisé en ce qu'on mélange le plâtre à forte expansion avec de l'eau dans un rapport pondéral de 100:20 à 100:60, en particulier de 100:35 à 100:45.

11. Procédé selon les revendications 9 et 10, caractérisé en ce que la température de la suspension aqueuse de plâtre s'élève à un maximum de 60°C, en particulier à 15–30°C.